# EUROPEAN PATENT APPLICATION

(11) **EP 3 382 500 A1**
(43) Date of publication of application: **03.10.2018**
(21) Application number: 18154432.1
(22) Date of filing: 31.01.2018
(51) Int. Cl.: G06F 1/20, G06F 1/30, G06F 11/30, G06F 1/32, G06F 1/28

(54) **THROTTLING, SUB-NODE COMPOSITION, AND BALANCED PROCESSING IN RACK SCALE ARCHITECTURE**

(30) Priority: 29.03.2017 US 201715472910
(71) Applicant: Intel Corporation, Santa Clara, CA 95054 (US)
(72) Inventor: KUMAR, Mohan J., Aloha, OR 97007 (US); NACHIMUTHU, Murugasamy K., Beaverton, OR 97007 (US); SRINIVASAN, Vasudevan, Portland, OR 97229 (US)
(74) Representative: Rummler, Felix

(57) **Abstract**

A rack system including a plurality of nodes can implement thermal/power throttling, sub-node composition, and processing balancing based on voltage/frequency. In the thermal/power throttling, at least one resource is throttled, based at least in part on a heat event or a power event. In the sub-node composition, a plurality of computing cores is divided into a target number of domains. In the processing balancing based on voltage/frequency, a first core performs a first processing job at a first voltage or frequency, and a second core performs a second processing job at a second voltage or frequency different from the first voltage or frequency.

## Description

### TECHNICAL FIELD OF THE DISCLOSURE

The present disclosure relates generally to a computer rack system including a plurality of nodes (also called blades or sleds) and, more particularly, to thermal/power throttling, sub-node composition, and processing balancing based on voltage/frequency in such a rack system.

### BACKGROUND

Disaggregated computing is an emerging field based on the pooling of resources. One disaggregated computing solution is known as rack scale architecture (RSA).

In today's systems, upon the occurrence of a power budget or a thermal event in a rack, the system throttles the rack components (e.g., the compute nodes) linearly. This linear throttling can affect the fulfillment of service level agreements (SLAs) for most systems. For example, if critical components such as storage nodes are throttled, the throttling would affect the performance of all of the nodes.

Further, in a conventional rack scale architecture, the compute nodes are composed at a bare metal level. Thus, the rack owner provides a composed system user at least one of the compute nodes, as well as pooled system components, such as storage or network bandwidth. In addition, as technology advances, the number of processing cores in the processors in the system keeps increasing. Accordingly, some of the composed system users might not require all of the cores in the processors.

Additionally, individual cores can operate at different voltages, due to inherent manufacturing variations. A conventional operating system (OS) scheduler is not aware of these variations in the individual cores.

Thus, conventionally, the system limits all of the cores within a socket or die to work at the lowest common core voltage and frequency of all of the available cores. The OS scheduler therefore places workloads evenly across the die space.

As a result, neighboring cores can overheat. This overheating can result in the core temperature causing a performance bottleneck to occur.

### BRIEF DESCRIPTION OF THE DRAWINGS

Figure 1 illustrates an implementation of a rack according to one implementation of the present disclosure;
Figure 2 illustrates an exemplary algorithm performed by an orchestration layer or a BMC for throttling based on thermal/power zones in accordance with one implementation of the present disclosure;
Figure 3 illustrates an exemplary processing core in accordance with one implementation of the present disclosure;
Figure 4 illustrates an example of a conventional compute node;
Figure 5 illustrates an example of a compute node in accordance with an implementation of the present disclosure;
Figure 6 illustrates another example of a compute node in accordance with one implementation of the present disclosure;
Figure 7 illustrates an algorithm for determining a configuration of a compute node in accordance with one implementation of the present disclosure;
Figure 8 illustrates an algorithm for selecting a subdomain to satisfy a job of an SLA in accordance with one implementation of the present disclosure;
Figure 9 illustrates an example of frequencies for compute nodes within a drawer of a rack in accordance with one implementation of the present disclosure; and
Figure 10 illustrates an algorithm for assigning a node based on a V-F graph in accordance with one implementation of the present disclosure.

### DESCRIPTION OF EXAMPLE IMLPEMENTATIONS OF THE DISCLOSURE

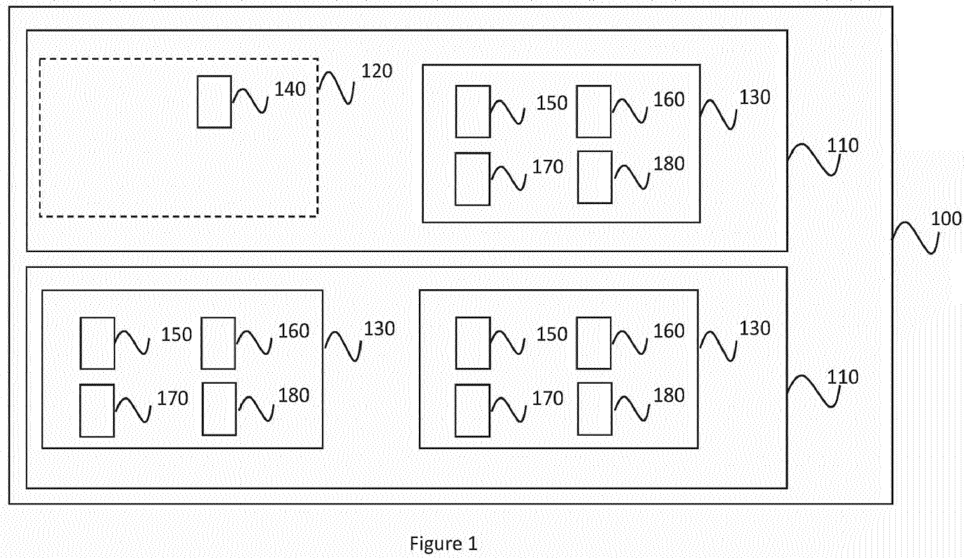

Figure 1 illustrates an implementation of a rack 100 according to one implementation of the present disclosure.

In many implementations, the rack 100 operates in a software-defined infrastructure (SDI). In an SDI, an executed application and its service level define the system requirements. An SDI enables a data center to achieve greater flexibility and efficiency by being able to dynamically "right-size" application resource allocation, enabling provisioning service in minutes and significantly reducing cost.

The rack 100 interfaces with an orchestration layer. The orchestration layer is implemented in software that runs on top of a POD manager in the disclosed rack scale design context. The POD manager manages a POD, which is a group of one or more racks commonly managed by the POD manager.

The orchestration software provisions, manages and allocates resources based on data provided to the orchestration software by service assurance layers. More specifically, the orchestration software is responsible for providing resources, such as compute resources, network resources, storage resources, and database resources, as well as composing and launching application or workloads, and monitoring hardware and software. Although the orchestration layer need not be included in the rack 100, the orchestration layer is so included in at least one implementation. The orchestration layer includes or is executed by hardware logic. The hardware logic is an example of an orchestration means.

Intelligent monitoring of infrastructure capacity and application resources helps the orchestration software make decisions about workload placement based on actual, current data as opposed to static models for estimated or average consumption needs based on historical data.

The rack includes a plurality of drawers 110. Each drawer 110 includes node slots 120, sensors, and nodes 130. Each of the nodes in the rack 100 is at least partially implemented in hardware. In the present example, nodes 130 are compute nodes. However, nodes can be storage nodes, field-programmable gate array (FPGA), etc.

The node slots 120 accept compute nodes 130 for insertion. Fig. 1 illustrates two drawers 110 including a total of one vacant node slot 120 and three node slots occupied by compute nodes 130. Of course, this illustration is simply for exemplary purposes and in no way limits implementations of this disclosure. For example, all of the node slots can be filled by compute nodes 130. In addition, each drawer 110 can have fewer or more slots.

The node slots 120 include structures for mounting the compute nodes 130 within a drawer 110. The node slots 120 additionally include wiring to provide power and to communicate signals with the compute nodes 130.

The node slots 120 include a sensor 140 that indicates when and whether a compute node 130 has been inserted into the respective node slot 120. The sensor 140 can transmit a signal to the orchestration layer indicating the insertion of a compute node 130.

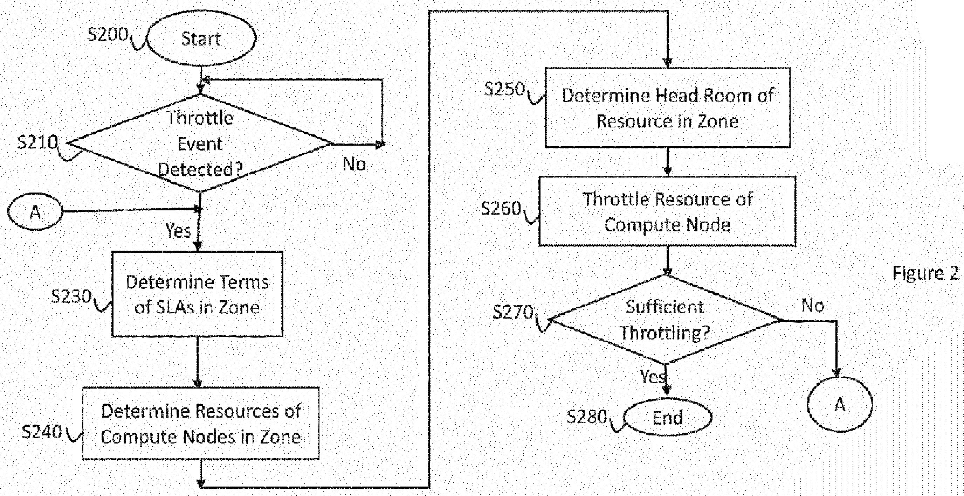

The sensors include sensors 150 and 160. Fig. 2 illustrates the sensors 150 and 160 as mounted on the node 130. Additionally or alternatively, the sensors 150 and 160 can also be mounted on the node slots 120. The sensors 150 measure temperatures near the compute nodes 130. The sensors 150 transmit their measurements to the controller 170. The sensors 150 are examples of a temperature sensing means.

The sensors 160 measure electrical characteristics within the drawer 110. These electrical characteristics can be a voltage, a resistance, a current, or a combination thereof (e.g., a power). The sensors 160 can be located in a number of locations. As a result, the sensors 160 can measure, for example, the voltage difference between or resistance across any two nodes, whether in the same drawer or in some other location. Similarly, the sensors 160 can determine the resistance across or current through any wire, such as within drawer 110 or within the rack 100 overall.

The controller 170 receives the transmitted measurements from the sensors 150 and 160. The controller 170 controls aspects of the compute nodes 130 based on measurements sensed by the sensors 150 and 160. For example, the controller can implement at least portions of the algorithms described below. The controller 170 also performs the processing of a job assigned to the compute node 130 in an SLA. The controller 170 can communicate data (e.g., signals from sensors 150 and 160) to an orchestration layer of the rack.

The controller 170 can be a baseband management controller (BMC) or a portion of the orchestration layer. The controller 170 includes a cache memory. The controller 170 is an example of a processing means.

In one implementation, the compute nodes 130 include nonvolatile memory or solid state drives implemented as additional memory 180. The compute nodes 130 can also include networking resources. The memory 180 is an example of a storing means.

### Throttling Based on Thermal/Power Zones

Service providers providing, e.g., cloud services contract with users to provide computer rack services at a defined service level. The resulting contracts are called SLAs. The terms of these SLAs can be as complex as human creativity permits. However, in some instances, an orchestration layer or a BMC of the rack can enforce the terms of these SLAs as policies.

For example, the rack owner might define an SLA on a compute-node basis. In such a case, the rack owner assigns a user at least a portion of one or more compute nodes of a rack to perform a job. Alternatively or additionally, the rack owner might define the SLA on the basis of a job duration, in which the rack owner agrees to allow the user to perform a job within a defined duration (such as 30 minutes). This job might be for the use of at least one compute node for the duration itself. The job might also be for the completion of a particular task within the duration regardless of the number of nodes. Alternatively or additionally, the SLA might require an amount of bandwidth, or a number of frames processed per second, or a number of instructions executed by second.

Alternatively or additionally, the rack owner might define an SLA on the basis of a disposition of errors. For example, an error might be defined as an interrupted upload, and the corresponding disposition might be re-performing the upload. In another case, the error might be defined as a program not continuously running during a job; the error's corresponding disposition might be re-performing the job. In yet another case, the process might be designated mission critical. In this case, if any designated error occurs, the rack owner might be liable to the user for compensatory financial damages.

During the fulfillment of these SLAs, error (especially power-based error) or thermal events can occur for which the orchestration layer, BMC, Basic Input/Output System (BIOS), microcode or OS throttles resources. These resources can be, for example, memory bandwidth, processor interconnect bandwidth, a voltage applied to the processing cores, frequency applied to the processing cores, or a number of processor operations or memory accesses.

The reduction of bandwidth generally refers to the bandwidth provided between a compute node and an external network, such as the Internet. However, the reduction of bandwidth can also relate to an internal network bandwidth or a bus bandwidth internal to the node or a rack.

The BMC, BIOS, orchestration layer, or OS scheduler can perform the throttling in a number of ways. As one example, the BMC, BIOS orchestration layer, or OS scheduler can reduce or slow memory access bandwidth. That is, the BMC, BIOS orchestration layer, or OS scheduler can reduce the processor core clock. As another example, the BMC, BIOS, orchestration layer, or OS scheduler can decrease the voltage applied to the processor cores. This decrease in system voltage or frequency can result in a reduction in a number of accesses or operations performed in a period of time and, thus, reduces the bandwidth or power required for the system.

The throttling generally to processors, memories, or network resources. In the case of the BMC or orchestration layer throttling a processor, accesses to a processor pertain to the rate of instructions executed by the processor over a predetermined time. In the case of the BMC or orchestration layer throttling the number of accesses to a memory, these accesses pertain to the number of reads and writes performed by the memory over a predetermined period of time.

In one embodiment, the Pod Manager or orchestration layer first creates a map of the nodes (e.g., nodes 130) in the rack (e.g., rack 100) based on signals received from sensors (e.g., sensors 140) in the drawers (e.g., drawer 110). For example, the Pod manager or orchestration layer determines the number of drawers in the rack, and the location of each occupied node in each drawer. Next, the Pod Manager or orchestration layer associates each occupied node with terms of that node's respective SLA(s). In many cases, the Pod Manager or orchestration layer has itself assigned the SLA to the node. The Pod Manager or orchestration layer then determines the errors that can be tolerated by each node without violating terms of that node's SLA(s).

While the system is operational, the Pod Manager or orchestration layer generates a heat and/or power map of the rack, based on signals received from sensors (e.g., sensors 150 and/or 160). The Pod Manager or orchestration layer can generate the map periodically. For example, the BMC or orchestration layer can generate (or update) the map every five seconds. Of course, the Pod Manager or orchestration layer can generate (or update) the map more frequently or less frequently, at random intervals, or at dynamically adjusted intervals.

Figure 2 illustrates an exemplary algorithm performed by the orchestration layer or the BMC for throttling based on thermal/power zones. The subject matter of Fig. 2 can be, but is not necessarily, implemented in conjunction with the subject matter of Fig. 1.

The algorithm begins at S200 and advances to S210. In S210, the Pod Manager, orchestration layer, or a sensor determines whether a throttle event has occurred in a zone of the rack. In addition, the Pod Manager or orchestration layer determines the zone in which the throttle event occurs. The zone can be a drawer, a node, a nearest fraction (e.g., half, third, quarter) nearest the node, or some other defined zone.

A throttle event can be a heat event or a power event. A heat event is an event in which the orchestration layer, the Pod Manager, or a sensor determines that a sensor 150 has sensed that the temperature in a zone of the drawer has exceeded a predetermined threshold. A power event is an event in which the orchestration layer, the Pod Manager, or a sensor determines that a sensor 160 has sensed that a voltage difference or resistance becomes zero or a current or power exceeds a predetermined threshold in a zone of the rack. In any case, a throttle event need not be a heat event or a power event and can be a different event, as well.

If the Pod Manager, the orchestration layer, or sensor determines that a throttle event has not occurred in a zone, the algorithm returns to S210. In contrast, if the Pod Manager, the orchestration layer, or a sensor determines that a throttle event has occurred, the algorithm proceeds to S230.

At S220, the orchestration layer or a Pod Manager or a BMC determines what resource is to be throttled. As discussed above, these resources can be a bandwidth, power, or a number of accesses to a memory or a processor. The algorithm then proceeds to S230.

In S230, the system determines the terms of each SLA in the zone. The terms of these SLAs can often be reduced to a bandwidth, a power consumption, or a number of accesses to a memory or a processor. Thus, the system determines particular resources eligible for throttling. The algorithm then proceeds to S240.

In S240, the system determines the resources of the compute node. In one implementation, the system determines the resources for each compute node performing a non-mission critical job. More specifically, the system determines the bandwidth, the power consumption, or the number of accesses to a memory or a processor performed by the compute node. The algorithm then proceeds to S250.

In S250, the system determines the head room for resources of each compute node in the zone. This determination is made relative to the terms determined in S230, as well as the resources determined in S240. More specifically, the system determines whether the resources determined in S240 exceed the terms of the SLA determined in S230. If so, those excessive resources can be throttled by the system. The algorithm then proceeds to S260.

In S260, the system throttles an eligible resource of a compute node in the zone based on the head room determined in S250. For example, the system throttles the bandwidth, the power consumption, or the number of accesses to a memory or a processor performed by the compute node. In one implementation, this throttling is performed by reducing a system clock or a system voltage. The algorithm then proceeds to S270.

In S270, the Pod Manager, the BMC or orchestration layer determines whether sufficient throttling has occurred. In one implementation, the Pod Manager, the BMC or orchestration layer determines whether the heat event or power event has concluded. If the heat event or power event has not concluded, then the Pod Manager, the BMC or orchestration layer can decide that sufficient throttling has not occurred. If the system determines that sufficient throttling has not occurred, the algorithm returns to S220. On the other hand, if the Pod Manager, the BMC, orchestration layer, or sensor determines that sufficient throttling has occurred, then the algorithm concludes at S280.

In some implementations of the algorithm of Fig. 2, the BMC is replaced by a management controller. Examples of a management controller include a Management Engine (ME) and an Innovation Engine (IE) in PCH.

Thus, sufficient performance for certain nodes can be maintained in the case of throttle events. As a result, the impact on an SLA from a throttling event can be minimized or even avoided.

### Sub-domain composition

An implementation according to the present disclosure divides a compute node into subdomains that allow multiple OSes to be booted at a bare metal level. The division of a compute node into subdomains can be based on a capacity, such as an amount of memory, a processor speed, and a cache size.

A platform controller hub (PCH) is an evolution of previous northbridge/southbridge designs. The PCH is generally directed to southbridge functionality. However, the PCH can also include some northbridge functions, such as clocking. The PCH can also controls data paths and support functions, such as a Direct Media Interface (DMI). In some implementations, the PCH can control a Flexible Display Interface (FDI). One implementation of the PCH is an Intel® PCH.

At least a portion of the PCH functionality can be emulated by the micro code within the one or more processor cores and/or system management interrupt (SMI) and some field-programmable gate array (FPGA) components to embed a hypervisor in the BIOS itself.

Before turning to additional activities associated with the present disclosure, some foundational information is provided to assist understanding. The number of cores in a system is not necessarily equal to the number of sockets. A socket corresponds to a physical portion of physical board (such as a printed circuit board [PCB]). As such, a sled can host a variety of numbers of sockets. A socket includes a number of processing cores, an input/output controller, a memory controller, and a link controller.

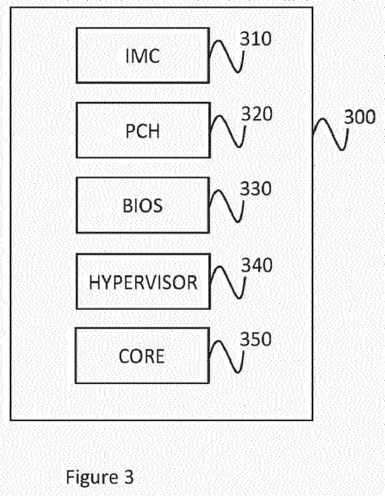

Figure 3 illustrates an exemplary processor 300 in accordance with one implementation of the present disclosure. Processor 300 includes an integrated memory controller (IMC) 310, a platform controller hub (PCH) 320, a BIOS 330, a hypervisor 340, and a processing core 350. Many implementations include more than one processing core 350.

IMC 310 controls the memory for processing core 350. If processing core 350 is split into multiple subdomains, the IMC 310 controls the memory for each of the subdomains.

The platform controller hub (PCH) 320 supports the subdomains. Normally, there is one PCH per processing core 350. In some implementations of the present disclosure, the PCH can be emulated. Thus, virtual subdomains can be created without an additional PCH.

BIOS 330 is a set of instructions stored in memory executed by a processor. More specifically, the BIOS 330 is a type of firmware that performs a hardware initialization during a booting process (e.g., power-on startup). The BIOS 330 also provides runtime services for operating systems and programs.

BIOS 330 can be used to embed hypervisor 340. When the hypervisor 340 is embedded in the BIOS, the BIOS acts as a trusted virtual machine monitor (VMM), where multiple OSes can be loaded. The BIOS 330 is considered to be a trusted component. Once the new BIOS image is signed, then the hypervisor 340 is also signed to make sure the integrity of the embedded hypervisor 340 is not compromised. The internal channel established by the hypervisor 340 with the BIOS 330 is trusted. Thus, this embedding of the hypervisor 340 permits a trusted communication to be established to the BMC.

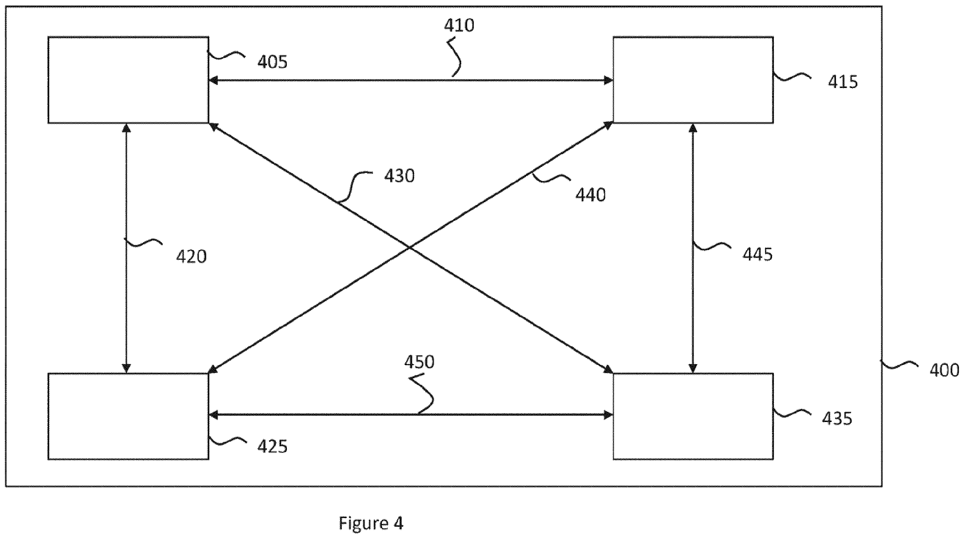

Fig. 4 illustrates an example of a conventional compute SLED 400. Compute SLED 400 includes processing sockets 405, 415, 425, and 435. Each of processing sockets 405, 415, 425, and 435 is implemented in hardware and can have multiple cores.

Processing socket 405 communicates with processing socket 415 via crosslink 410, communicates with processing socket 435 via crosslink 430, and communicates with processing socket 425 via crosslink 420. Processing socket 415 communicates with processing socket 435 via crosslink 445 and communicates with processing socket 425 via crosslink 440. Processing socket 435 communicates with processing socket 425 via crosslink 450. Crosslinks 410, 420, 430, 440, 445, and 450 are intra-processor crosslinks.

Although compute SLED 400 is illustrated with four processing sockets, compute SLED 400 can include additional or fewer processing sockets. In such a case, each individual processing socket can communicate with each other processing socket via a crosslink. However, a particular processing socket need not communicate with every other processing socket via a crosslink.

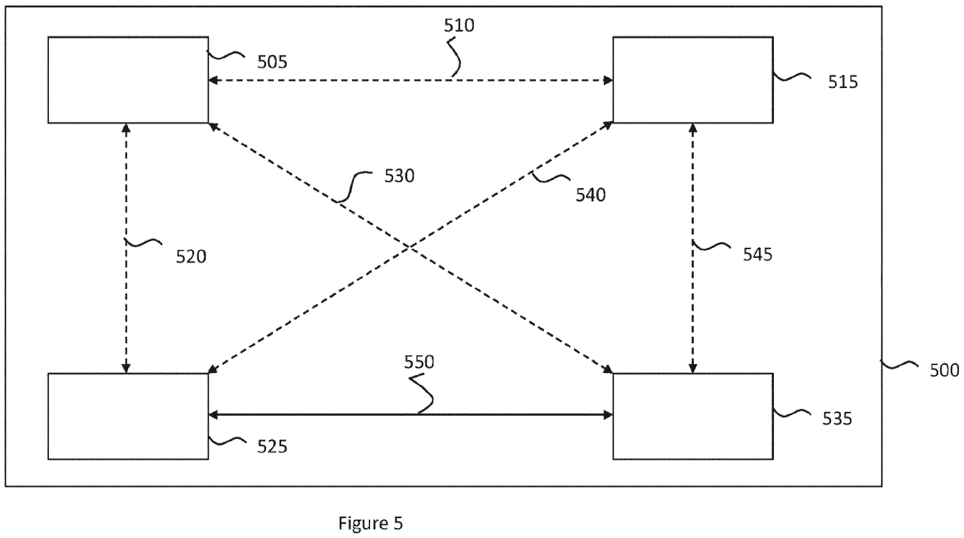

Fig. 5 illustrates an example of compute SLED 500 in accordance with an implementation of the present disclosure. Compute SLED 500 includes processing sockets 505, 515, 525, and 535. Each of processing sockets 505, 515, 525, and 535 is implemented in hardware.

In Fig. 5, crosslinks 510, 520, 530, 540, and 545 have been disabled by the hypervisor 340. Thus, processing socket 505 does not communicate with processing socket 515 via crosslink 510, does not communicate with processing socket 535 via crosslink 530, and does not communicate with processing socket 525 via crosslink 520. Processing socket 515 does not communicate with processing socket 535 via crosslink 545 and does not communicate with processing socket 525 via crosslink 540. However, as illustrated in Fig. 5, processing socket 535 communicates with processing socket 525 via crosslink 550. Crosslinks 510, 520, 530, 540, 545, and 550 are intra-processor crosslinks.

In this manner, processing sockets 505 and 515 operate independently of each other, as well as independently of processing sockets 525 and 535. Processing sockets 525 and 535 operate cooperatively. Thus, Fig. 5 illustrates three domains, the first being processing socket 505, the second being processing socket 515, and the third being processing sockets 525 and 535. Because these three domains do not communicate with each other, they are considered isolated.

Fig. 5 illustrates one implementation of crosslink disabling by the hypervisor 340. In another implementation, crosslinks 510, 520, 530, 540, 545, and 550 are all disabled by the hypervisor 340. Thus, each of processing sockets 505, 515, 525, and 535 operates independently of each other. In yet another implementation, crosslinks 520, 530, 540, and 545 are disabled by the hypervisor 340, but crosslinks 510 and 550 are not disabled by the hypervisor 340. Thus, compute SLED 500 can include two domains, the first being processing sockets 550 and 515, the second being processing sockets 525 and 535.

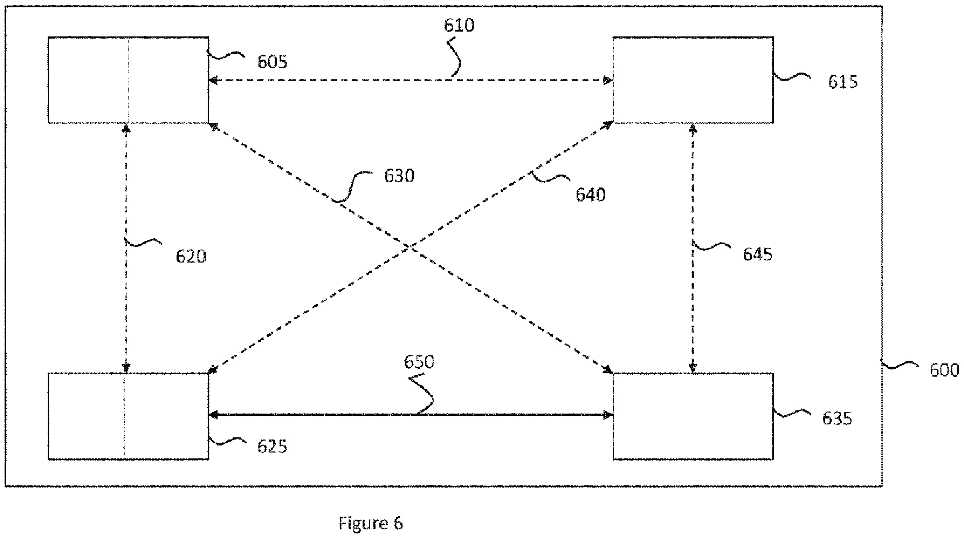

Fig. 6 illustrates an example of compute SLED 600 in accordance with one implementation of the present disclosure. Compute SLED 600 includes processing sockets 605, 615, 625, and 635. Each of processing sockets 605, 615, 625, and 635 is implemented in hardware.

Further, each of processing sockets 605, 615, 625, and 635 includes a hypervisor. Thus, compute SLED 600 effectively has five domains. Crosslinks 610, 620, 630, 640, 645, and 650 are intra-processor crosslinks.

The hypervisor implementations of Fig. 6 are illustrated as occurring subsequent to the crosslink disabling of Fig. 5 by hypervisor 340. However, such illustration is merely for the purpose of explanation. The hypervisor implementations of Fig. 6 can occur previous to or contemporaneous with the crosslink disabling of Fig. 5. Further, an implementation including the crosslink disabling of Fig. 5 by the hypervisor 340 need not include the hypervisor implementations of Fig. 6. Similarly, an implementation including the hypervisor implementations of Fig. 6 need not include the crosslink disabling of Fig. 5 by hypervisor 340.

Each of the cores of processor sockets 605, 615, 625, and 635 can be further sub-divided when the system is partitioned. For example, assume each of processor sockets 605, 615, 625, and 635 contain 10 cores. In this case, the compute SLED 600 can operate cooperatively as a single entity that includes 4 sockets with 10 cores per socket. The compute SLED 600 can also operate as two entities, each including 2 sockets with 10 cores per socket. In addition, the compute SLED 600 can operate as four entities that each include 1 socket with 10 cores per socket. Such implementations are examples of socket level partition. Additionally, the sockets can be sub-divided. Thus, in one example, the compute SLED 600 can operate as eight entities, each of which includes 5 cores of one socket. Of course, a socket can be sub-divided into any number of cores. An OS on can be run on each sub-divided socket.

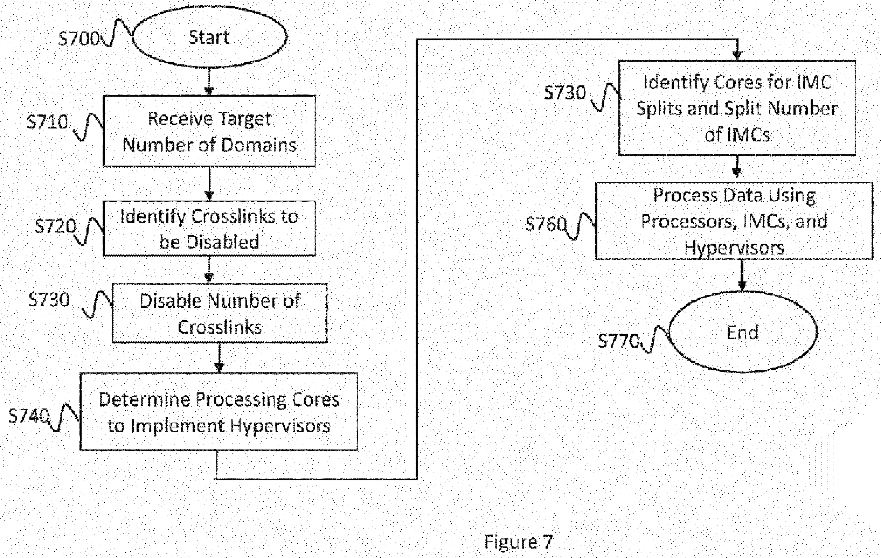

Fig. 7 illustrates an algorithm for determining a configuration of a compute node in accordance with one implementation of the present disclosure.

The algorithm begins at S700 and proceeds to S710 in which a BMC or orchestration layer receives a target number of domains. In some implementations, the rack owner specifies the target number of domains. In various implementations, applications or jobs can themselves provide the target number of domains.

In other implementations, the BMC or orchestration layer receives an SLA. The BMC or orchestration layer can determine from the SLA a set of resources, such as a number of cores, an amount of memory, or an amount of network bandwidth. In at least one implementation, the BMC or orchestration layer receives the set of resources, such as the number of cores, the amount of memory, or the amount of network bandwidth. The compute node then determines a minimal set of resources (e.g., processor cores) to provide these resources.

Further, in many embodiments, the target number of domains is a power of 2. However, the target number of domains is not so limited. The algorithm then advances to S720.

In S720, the hypervisor 340 determines the crosslinks (e.g., crosslinks 510, 520, 530, 540, 545, and 550) to be disabled. The algorithm then advances to S730.

In S730, the hypervisor 340 disables the number of crosslinks. The algorithm then advances to S740.

In S740, the BMC or orchestration layer determines the processing cores to implement hypervisors. The use of hypervisors slightly decreases overall performance. Thus, the use of hypervisors has a lower priority compared to other operations to change the number of subdomains. The identified processing cores implement the hypervisors. The algorithm then advances to S750.

In S750, the BMC or orchestration layer determines the processing cores to have their IMCs split and splits the number of IMC. These processing cores are those divided with the use of hypervisors. The algorithm then advances to S760.

Thus, by subdividing the processor cores at the socket level in S730 and implementing hypervisors at S740, the processor cores are divided into the target number of subdomains received at S710.

In S760, the processing cores process data (e.g., perform a job defined in an SLA) using the processors, IMCs, and hypervisors described above. The algorithm then concludes in S770.

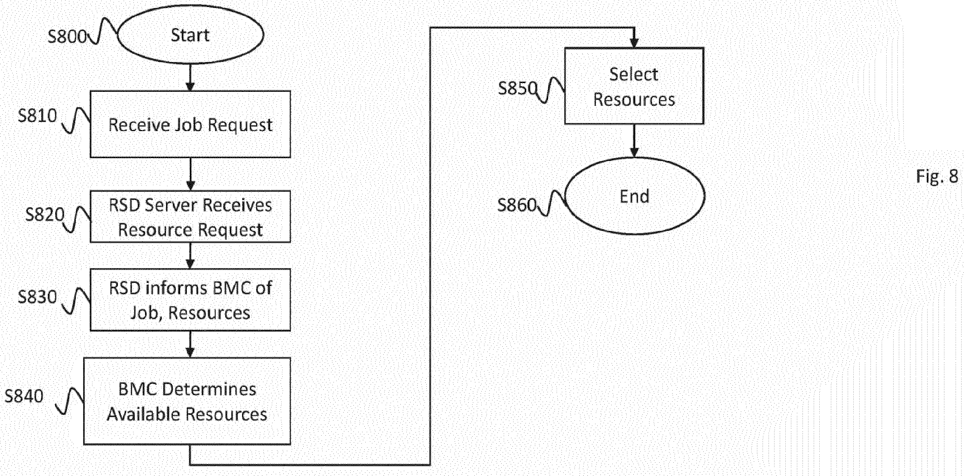

Fig. 8 illustrates an algorithm for selecting a subdomain to satisfy a job of an SLA in accordance with one implementation of the present disclosure.

The algorithm begins at S800 and advances to S810, in which a server receives a job request associated with an SLA. The algorithm then advances to S820.

In S820, a rack scale design (RSD) server receives a resource request. For example, the job might use predefined processing or memory resources (e.g., 8 cores or 2 terabytes of memory). The RSD server receives an indication of these resources from an application. Thus, depending on the job, the system knows the number of processors to be provided. The algorithm then advances to S830.

In S830, the RSD server informs the BMC of the job and the resources to be provided. The algorithm then advances to S840.

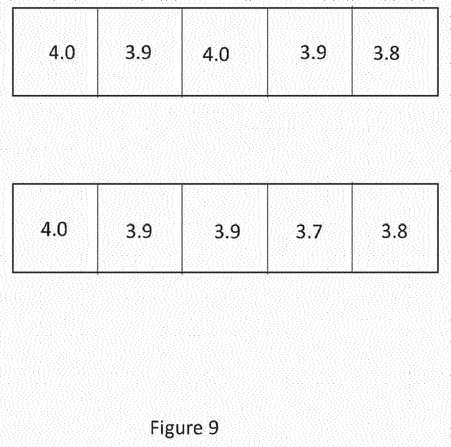

In S840, the BMC determines available resources as later described with regard to Fig. 9. The algorithm then advances to S840.

In S850, the resources are selected. In one implementation, the BMC selects the minimum resources. More specifically, the BMC selects the subdomain with the fewest resources that satisfy the SLA. In another implementation, the BMC provides a list of available resources to a pod manager. The pod manager than selects the resources. Thus, the algorithm can dedicate fewer resources to each SLA. The algorithm then advances to S860, in which the algorithm concludes.

Thus, some implementations of the present disclosure allow a compute node to expose the system as a configurable system that implements multiple subdomains. A user can request a certain configuration, such as a number of cores and an amount of memory. The system can be reconfigured, such as through the use of a hypervisor, to match the request and expose the system as bare metal components to the rack scale composed system user.

This disclosure also lets a rack owner make effective use of their racks by not overcommitting resources to any one user.

### Expose V-F graphs of cores

Imperfections in manufacturing yield prevent some processing cores within a socket of a compute node from operating at the same maximum voltage as other processing cores. Conventionally, all of the cores of a socket are capped at a same maximum voltage and frequency to avoid damaging some of the processing cores.

Conventionally, an OS scheduler or a hypervisor scheduler randomly selects cores to run jobs. Further, the POD manager (PODM) assumes the maximum voltage and frequency for all of the cores are the same. Hence, as long as the PODM knows the maximum voltage and frequency, the PODM can calculate the total performance of the socket. For example, if core performance cp = V × F and there are 10 cores, then the total performance is 10 × cp.

A pod manager includes firmware and a software application program interface (API) that enables managing resources and policies and exposes a standard interface to hardware below the pod manager and the orchestration layer above it. The Pod Manager API allows usage of rack scale architecture (RSA) system resources in a flexible way and allows integration with ecosystems where the RSA is used. The pod manager enables health monitoring and problem troubleshooting (e.g., faults localization and isolation) and physical localization features.

An implementation of the present disclosure collects possible voltages and frequencies of operational states for each processor core in the BIOS, and provides the data to the PODM to effectively schedule the workloads to get better performance. Thus, in one implementation of the present disclosure, P-states (or performance states) of the processing cores are evaluated. By exposing the voltage and frequency of each processor core to the OS or a hypervisor, as well as the PODM, each core can perform a processing job at a different voltage and/or frequency to improve performance rather than fixing a same voltage/frequency for job performance to all the cores.

The system is aware of the geometry of a processing core, as well as a location of the processing core within a compute node. Thus, some embodiments avoid overheating by splitting up jobs among the higher voltage processing cores. For example, rather than the OS scheduler selecting high-voltage cores that are located next to each other, the OS scheduler can select cores that are located further apart to reduce thermal effects to produce a socket-level thermal balancing.

Fig. 9 illustrates an example of frequencies for cores within a compute node of a rack in accordance with one implementation of the present disclosure. As shown in Fig. 9, the upper row of cores can handle maximum frequencies ranging from 3.8 to 4.0 GHz. In contrast, the lower row of cores can handle maximum frequencies ranging from 3.7 to 4.0 GHz. Thus, in a conventional node, the cores are capped to work at 3.7 GHz. This decreased cap prevents the majority of the cores from operating at their full capacity.

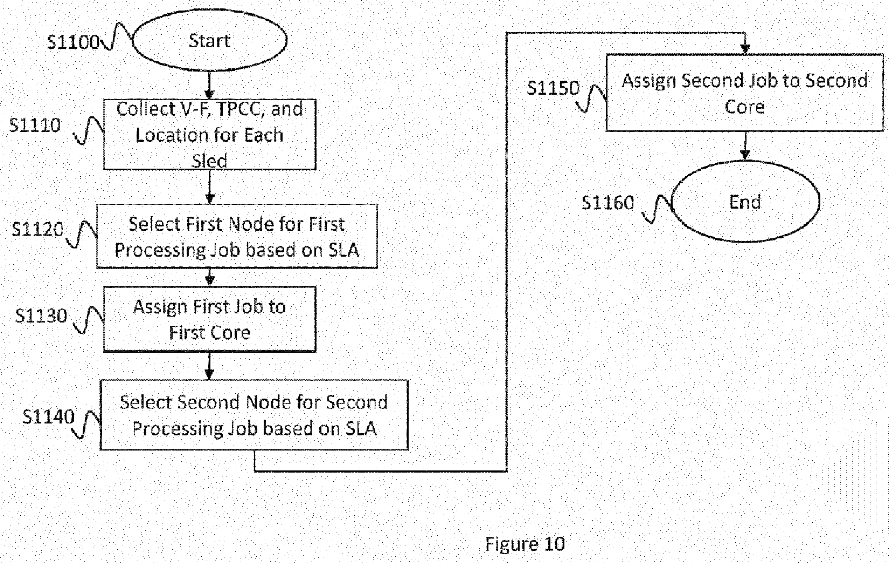

Fig. 10 illustrates an algorithm for assigning processing jobs to processing core based on a V-F graph in accordance with one implementation of the present disclosure.

At boot-up, a processor executes BIOS. The BIOS executed by the processor determines the location of each sled in the drawer. The BIOS executed by the processor can determine these locations based on, for example, a signal received from a sensor monitoring each location for a sled.

For each sled, the BIOS executed by the processor collects at S1110 the voltage or frequency of operational state tolerated by each processor core of a plurality of processor cores of a node, a maximum transactions per second (TPCC) tolerated by the processor core, and a location of the processing core. The BIOS sends this information to the orchestration layer.

Each core's maximum frequency is determined at the time of manufacturing, and the maximum settings are fused during manufacturing. The PCU (Power Control Unit) or similar power controller can read the fused settings and control the power to each core. Generally, the performance states are exposed to the OS, and the OS can set the performance state for individual cores by setting a Model Specific Register (MSR) in each core.

At S1120, the POD manager orchestration selects a compute node and pushes a workload to the compute node based on a first SLA or TPCC capabilities. However, the POD manager orchestration does not necessarily have control over which core in the socket is going to execute the workload.

At S1130, the OS or a hypervisor within the selected compute node receives a first processing job and a first SLA corresponding to the first job. Thus, the OS scheduler or a hypervisor scheduler assigns the first processing job to a first core in the socket. Specifically, the OS scheduler or hypervisor scheduler determines to assign the first processing job to the first processing core based on the first SLA and the voltage or frequency tolerated by each core. More particularly, the OS scheduler or hypervisor scheduler determines to assign the first processing job to the first core based on a duration of time (e.g., a number of minutes) or a TPCC in the SLA.

In addition, the OS or hypervisor attempts to minimize the duration and/or the TPCC above that agreed to in the first SLA. For example, a processing job might require 75 million instructions per second. A first processing core might be capable of 100 million transactions per second. A second processing core might be capable of 80 million transactions per second. In this case, the OS or hypervisor selects the second processing core, because its 5 million transactions per second are less than the first processing core's additional 20 million transactions per second.

Similarly, a first processing core might be capable of completing a job in 10 minutes. In contrast, a second processing core might be capable of completing the job in 12 minutes. In this case, the OS or hypervisor selects the first processing core, because the first processing core can complete the job in less time.

Of course, the OS or hypervisor can trade TPCC off against completion time. This trade-off can occur in many ways and is outside the scope of the present disclosure.

In assigning the first processing job to the first core, the OS or hypervisor sets the performance state for the first core by setting the MSR in the respective core.

At S1140, as before, the POD manager orchestration selects a compute node and pushes a workload based on a second SLA and TPCC capabilities. Again, the POD manager orchestration does not necessarily have control over which core in a socket is going to execute the workload.

At S1150, the OS or hypervisor in the selected compute node, which may or may not be the same as the node selected for the first processing job, receives a second processing job and a second SLA corresponding to the second processing job. Of course, the second SLA can be the same SLA as the first SLA. Thus, the OS scheduler or hypervisor scheduler assigns the second processing job to a second core based on the second SLA, the frequency of the second core, and the locations of the first and second cores.

In particular, the OS scheduler or hypervisor scheduler can assign the second processing job to the second core based on similar SLA and voltage and frequency criteria as the OS or hypervisor assigns the first processing job to the first core. In addition, the OS scheduler or hypervisor scheduler can assign the second processing job to the second core based on the locations of the first and second cores. In particular, the OS scheduler schedules non-adjacent cores on the same die to run workloads to avoid overheating caused by running the workloads on cores on the same die that are next to each other.

In assigning the second processing job to the second core, the OS or hypervisor sets the performance state for the second core by setting the MSR in the respective core.

The algorithm then concludes at S1160.

Some implementations of the present disclosure enable each core to individually advertise its maximum voltage and frequency of operation, as well as the location of the core within the die. Hence, compared to conventional sockets that are capped at the lowest frequency across all the cores in a die, some implementations of the present disclosure can give better performance.

The OS scheduler itself can be aware of these data and can run the cores at their respective maximum voltage or frequency or let the individual cores automatically run at their respective maximum voltage or frequency to get a better performance. For example, the POD manager can calculate the total performance as cp1 + cp2 + ... + cp10 (= V1×F1 + V2×F2 + ... + V10×F10). This way, extra performance can be achieved, and the POD manager can accurately determine the performance rather than the conventional method in which the voltage and frequency are capped for all processors.

In addition, the OS can be aware of each core's location and can schedule jobs such that the OS spreads jobs evenly to keep the temperature spread evenly.

Thus, benchmark data (such as TPC-C, TPC [Transaction Processing Performance Council] benchmark E, TPCx-V, SPECVirt, SPECjExt) accounting the Core V-F information can be exposed to the OS or hypervisor. Thus, the OS or hypervisor can choose a system to run the workload that can maximize the total performance and lower TCO.

### Modifications

Many modifications of the teachings of this disclosure are possible. For example, Fig. 2 set forth S230 as occurring before S240. In some implementations of the present disclosure, S240 is performed before S230.

In one example embodiment, electrical circuits of the FIGURES can be implemented on a board of an electronic device. The board can be a general circuit board that holds various components of an internal electronic system of the electronic device and, further, provide connectors for other peripherals. More specifically, the board can provide electrical connections by which other components of the system can communicate electrically. Processors (inclusive of digital signal processors, microprocessors, and supporting chipsets) and computer-readable non-transitory memory elements can be coupled to the board based on configuration needs, processing demands, and computer designs. Other components such as external storage, additional sensors, controllers for audio/video display, and peripheral devices can be attached to the board as plug-in cards, via cables, or integrated into the board itself. In various embodiments, the functionalities described herein can be implemented in emulation form as software or firmware running within one or more configurable (e.g., programmable) elements arranged in a structure that supports these emulation functions. The software or firmware providing the emulation can be provided on non-transitory computer-readable storage medium comprising instructions to allow a processor to carry out those functionalities.

In another example embodiment, the electrical circuits of the FIGURES can be implemented as stand-alone modules (e.g., a device with components and circuitry to perform a specific application or function) or implemented as plug-in modules into application specific hardware of electronic devices. Particular embodiments of the present disclosure can be included in a system on chip (SOC) package, either in part or in whole. An SOC represents an IC that integrates components of a computer or other electronic system into a single chip. The SOC can contain digital, analog, mixed-signal, and often radio frequency functions, all of which may be provided on a single chip substrate. Other embodiments can include a multi-chip-module (MCM), with a plurality of separate ICs located within a single electronic package and to interact closely with each other through the electronic package. In various other embodiments, the digital filters can be implemented in one or more silicon cores in Application Specific Integrated Circuits (ASICs), Field Programmable Gate Arrays (FPGAs), and other semiconductor chips.

The specifications, dimensions, and relationships outlined herein (e.g., the number of processors, logic operations) have only been offered for purposes of example and teaching only. Such information can be varied considerably without departing from the spirit of the present disclosure or the scope of the appended claims. The specifications apply only to one non-limiting example and, accordingly, they should be construed as such. In the foregoing description, example embodiments have been described with reference to particular processor and/or component arrangements. Various modifications and changes can be made to such embodiments without departing from the scope of the appended claims. The description and drawings are, accordingly, to be regarded in an illustrative rather than in a restrictive sense.

With the numerous examples provided herein, interaction can be described in terms of two, three, four, or more electrical components. However, this description has been made for purposes of clarity and example only. The system can be consolidated in any manner. Along similar design alternatives, any of the illustrated components, modules, and elements of the FIGURES can be combined in various possible configurations, all of which are clearly within the scope of this disclosure. In certain cases, it can be easier to describe one or more of the functionalities of a given set of flows by only referencing a limited number of electrical elements. The electrical circuits of the FIGURES and its teachings are readily scalable and can accommodate a large number of components, as well as more complicated/sophisticated arrangements and configurations. Accordingly, the examples provided should not limit the scope or inhibit the teachings of the electrical circuits as potentially applied to a myriad of other architectures.

In this disclosure, references to various features (e.g., elements, structures, modules, components, steps, operations, characteristics, etc.) included in "one implementation," "example implementation," "an implementation," "another implementation," "some implementations," "various implementations," "other implementations," and the like are intended to mean that any such features are included in one or more implementations of the present disclosure, but may or may not necessarily be combined in the same implementations.

Some of the operations can be deleted or removed where appropriate, or these operations can be modified or changed considerably without departing from the scope of the present disclosure. In addition, the timing of these operations can be altered considerably. The preceding operational flows have been offered for purposes of example and discussion. Substantial flexibility is provided by implementations described herein in that any suitable arrangements, chronologies, configurations, and timing mechanisms can be provided without departing from the teachings of the present disclosure.

Other changes, substitutions, variations, alterations, and modifications can be ascertained to one skilled in the art, and the present disclosure encompasses all such changes, substitutions, variations, alterations, and modifications as falling within the scope of the claims. Optional features of the apparatuses and methods described above can also be implemented with respect to the methods or processes described herein and specifics in the examples can be used anywhere in one or more implementations.

### Examples

Example 1 is an apparatus to perform an event throttling, the apparatus comprising: a plurality of resources; one or more sensors; and a controller to throttle at least one resource of the resources, if the controller determines a heat event or a power event has occurred, wherein the throttling is based at least in part on one or more service level agreements (SLAs) associated with the resources.
In Example 2, the apparatus of Example 1 can optionally include the feature that the throttled at least one resource is associated with a lower level of service that is lower than a level of service associated with a resource that is not throttled.
In Example 3, the apparatus of any one of Examples 1-2 can optionally include the feature that the controller is to determine a capability of one of a plurality of compute nodes assigned to the one or more SLAs.
In Example 4, the apparatus of any one of Examples 1-3 can optionally include the feature that the controller is to determine the at least one resource of one of a plurality of compute nodes in a zone.
In Example 5, the apparatus of any one of Examples 1-4 can optionally include the feature that the controller is to determine a head room of the at least one resource available for throttling.
In Example 6, the apparatus of any one of Examples 1-5 can optionally include the feature that the controller is a BMC, a management controller, or is a part of an orchestration layer.
In Example 7, the apparatus of any one of Examples 1-6 can optionally include the feature that the at least one resource is a network bandwidth, a number of accesses to a memory, or a number of operations performed by a processor.
In Example 8, the apparatus of any one of Examples 1-7 can optionally include an orchestrator to track the plurality of resources, which work on tasks assigned to the one or more SLAs, and to group the plurality of resources into a zone.
In Example 9, the apparatus of any one of Examples 1-8 can optionally include the feature that throttled resources are all in a zone having a first SLA that is lower than resources in other zones associated with a second SLA, the second SLA being higher than the first SLA.
In Example 10, the apparatus of Example 9 can optionally include the feature that all resources in the zone having the first SLA are throttled before resources are throttled in a zone with a higher SLA.
In Example 11, the apparatus of any one of Examples 1-10 can optionally include the feature that the apparatus is a computing system.
Example 12 is an apparatus to perform an event throttling, the apparatus comprising: a plurality of resources; one or more sensors; and means for throttling at least one of the resources, if the means for throttling determines a heat event or a power event has occurred, wherein the throttling is based at least in part on one or more service level agreements (SLAs) associated with the resources.
In Example 13, the apparatus of Example 12 can optionally include the features that the throttled at least one resource is associated with a lower level of service that is lower than a level of service associated with a resource that is not throttled.
In Example 14, the apparatus of any one of Examples 12-13 can optionally include the feature that the means for throttling determines a capability of one of a plurality of compute nodes assigned to the one or more SLAs.
In Example 15, the apparatus of any one of Examples 12-14 can optionally include the feature that the means for throttling determines the at least one resource of one of a plurality of compute nodes in a zone.
In Example 16, the apparatus of any one of Examples 12-15 can optionally include the feature that the means for throttling determines a head room of the at least one resource available for throttling.
In Example 17, the apparatus of any one of Examples 12-16 can optionally include the feature that the means for throttling is a BMC, a management controller, or is a part of an orchestration layer.
In Example 18, the apparatus of any one of Examples 12-17 can optionally include the feature that the at least one resource is a network bandwidth, a number of accesses to a memory, or a number of operations performed by a processor.
In Example 19, the apparatus of any one of Examples 12-18 can optionally include an orchestration means for tracking the plurality of resources, which work on tasks assigned to the one or more SLAs, and for grouping the plurality of resources into a zone.
In Example 20, the apparatus of any one of Examples 12-17 can optionally include the feature that throttled resources are all in a zone having a first SLA that is lower than resources in other zones associated with a second SLA, the second SLA being higher than the first SLA.
In Example 21, the apparatus of Example 20 can optionally include the feature that all resources in the zone having the first SLA are throttled before resources are throttled in a zone with a higher SLA.
In Example 22, the apparatus of any one of Examples 12-21 can optionally include the feature that the apparatus is a computing system.
Example 23 is a method to perform an event throttling, the method comprising: throttling at least one resource of a plurality of resources, if a controller determines a heat event or a power event has occurred, wherein the throttling is based at least in part on one or more service level agreements (SLAs) associated with the resources.
In Example 24, the method of Example 23 can optionally include the feature that the throttled at least one resource is associated with a lower level of service that is lower than a level of service associated with a resource that is not throttled.
In Example 25, the method of any one of Examples 23-24 can optionally include determining a capability of one of a plurality of compute nodes assigned to the one or more SLAs.
In Example 26, the method of any one of Examples 23-25 can optionally include determining the at least one resource of one of a plurality of compute nodes in a zone.
In Example 27, the method of any one of Examples 23-26 can optionally include determining a head room of the at least one resource available for throttling.
In Example 28, the method of any one of Examples 23-27 can optionally include the feature that the controller is a BMC, a management controller, or is a part of an orchestration layer.
In Example 29, the method of any one of Examples 23-28 can optionally include the feature that the at least one resource is a network bandwidth, a number of accesses to a memory, or a number of operations performed by a processor.
In Example 30, the method of any one of Examples 23-29 can optionally include tracking, with an orchestrator, the plurality of resources, which work on tasks assigned to the one or more SLAs; and grouping, with the orchestrator, the plurality of resources into a zone.
In Example 31, the method of any one of Examples 23-30 can optionally include the feature that throttled resources are all in a zone having a first SLA that is lower than resources in other zones associated with a second SLA, the second SLA being higher than the first SLA.
In Example 32, the method of Example 31 can optionally include the feature that all resources in the zone having the first SLA are throttled before resources are throttled in a zone with a higher SLA.
Example 33 is a machine-readable medium including code that, when executed, causes a machine to perform the method of any one of Examples 23-32.
Example 34 is an apparatus comprising means for performing the method of any one of Examples 23-32.
In Example 35, the apparatus of Example 34 can optionally include the feature that the means for performing the method comprise a processor and a memory.
In Example 36, the apparatus of Example 35 can optionally include the feature that the memory comprises machine-readable instructions that, when executed, cause the apparatus to perform the method.
In Example 37, the apparatus of any one of Examples 34-36 can optionally include the feature that the apparatus is a computing system.
Example 38 is at least one computer-readable medium comprising instructions that, when executed, implement the method of any one of Examples 23-32 or realize the apparatus of any one of Examples 34-37.
Example 39 is a non-transitory, tangible, computer-readable storage medium encoded with instructions that, when executed, cause a processing unit to perform a method comprising: throttling at least one resource of a plurality of resources, if the processing unit determines a heat event or a power event has occurred, wherein the throttling is based at least in part on one or more service level agreements (SLAs) associated with the resources.
In Example 40, the medium of Example 39 can optionally include the feature that the throttled at least one resource is associated with a lower level of service that is lower than a level of service associated with a resource that is not throttled.
In Example 41, the medium of any one of Examples 39-40 can optionally include the feature of the method further comprising: determining a capability of one of a plurality of compute nodes assigned to the one or more SLAs.
In Example 42, the medium of any one of Examples 39-41 can optionally include the feature of the method further comprising: determining the at least one resource of one of a plurality of compute nodes in a zone.
In Example 43, the medium of any one of Examples 39-42 can optionally include the feature of the method further comprising: determining a head room of the at least one resource available for throttling.
In Example 44, the medium of any one of Examples 39-43 can optionally include the feature that the processing unit is a BMC, a management controller, or is a part of an orchestration layer.
In Example 45, the medium of any one of Examples 39-44 can optionally include the feature that the at least one resource is a network bandwidth, a number of accesses to a memory, or a number of operations performed by a processor.
In Example 46, the medium of any one of Examples 39-45 can optionally include the feature of the method further comprising: tracking, with an orchestrator, the plurality of resources, which work on tasks assigned to the one or more SLAs; and grouping, with the orchestrator, the plurality of resources into a zone.
In Example 47, the medium of any one of Examples 39-46 can optionally include the feature that throttled resources are all in a zone having a first SLA that is lower than resources in other zones associated with a second SLA, the second SLA being higher than the first SLA.
In Example 48, the medium of Example 47 can optionally include the feature that all resources in the zone having the first SLA are throttled before resources are throttled in a zone with a higher SLA.
Example 49 is an apparatus for sub-node composition, comprising: a memory element operable to store electronic code; and a plurality of processing cores operable to execute instructions associated with the electronic code, wherein an orchestration layer or BMC receives a target number of domains for the plurality of processing cores, and divides the plurality of computing cores into the target number of domains.
In Example 50, the apparatus of Example 49 can optionally include the feature that the plurality of processing cores are to communicate via a plurality of connections, and at least one of the plurality of the connections is disabled to create one of the target number of domains.
In Example 51, the apparatus of any one of Examples 49-50 can optionally include the feature that one of the plurality of processing cores executes a hypervisor to create one of the target number of domains.
In Example 52, the apparatus of any one of Examples 49-51 can optionally include the feature that each of the target number of domains concurrently performs a job from a different service level agreement.
In Example 53, the apparatus of any one of Examples 49-52 can optionally include the feature that one of the plurality of processing cores includes an integrated memory controller that supports two of the target number of domains executed by the one of the plurality of processing cores.
In Example 54, the apparatus of any one of Examples 49-53 can optionally include the feature that a job is assigned to one of the target number of domains based at least in part on a service level agreement.
In Example 55, the apparatus of any one of Examples 49-54 can optionally include the feature that a platform controller hub is emulated to support at least one of the target number of domains.
In Example 56, the apparatus of any one of Examples 49-55 can optionally include the feature that the apparatus is a computing system.
Example 57 is an apparatus for sub-node composition, the apparatus comprising: execution means for executing instructions associated with electronic code; and processing means for receiving a target number of domains for the execution means and for dividing the execution means into the target number of domains.
In Example 58, the apparatus of Example 57 can optionally include the feature that the execution means communicate via a plurality of connections, and at least one of the plurality of the connections is disabled to create one of the target number of domains.
In Example 59, the apparatus of any one of Examples 57-58 can optionally include the feature that one execution means executes a hypervisor to create one of the target number of domains.
In Example 60, the apparatus of any one of Examples 57-59 can optionally include the feature that each of the target number of domains concurrently performs a job from a different service level agreement.
In Example 61, the apparatus of any one of Examples 57-60 can optionally include the feature that one of the execution means includes means for supporting two of the target number of domains executed by the one of the execution means.
In Example 62, the apparatus of any one of Examples 57-61 can optionally include the feature that a job is assigned to one of the target number of domains based at least in part on a service level agreement.
In Example 63, the apparatus of any one of Examples 57-62 can optionally include the feature that a platform controller hub is emulated to support at least one of the target number of domains.
In Example 64, the apparatus of any one of Examples 57-63 can optionally include the feature that the apparatus is a computing system.
Example 65 is a method for sub-node composition, comprising: receiving, by a BMC or an orchestration layer, a target number of domains for the plurality of processing cores; and dividing, by the BMC or orchestration layer, a plurality of computing cores into the target number of domains.
In Example 66, the method of Example 65 can optionally include communicating with the plurality of processing cores via a plurality of connections; and disabling at least one of the plurality of the connections to create one of the target number of domains.
In Example 67, the method of any one of Examples 65-66 can optionally include executing, with one of the plurality of processing cores, a hypervisor to create one of the target number of domains.
In Example 68, the method of any one of Examples 65-67 can optionally include the feature that each of the target number of domains concurrently performs a job from a different service level agreement.
In Example 69, the method of any one of Examples 65-68 can optionally include the feature that one of the plurality of processing cores includes an integrated memory controller to support two of the target number of domains executed by the one of the plurality of processing cores.
In Example 70, the method of any one of Examples 65-69 can optionally include the feature that a job is assigned to one of the target number of domains based at least in part on a service level agreement.
In Example 71, the method of any one of Examples 65-70 can optionally include the feature that a platform controller hub is emulated to support at least one of the target number of domains.
Example 72 is a machine-readable medium including code that, when executed, causes a machine to perform the method of any one of Examples 65-71.
Example 73 is an apparatus comprising means for performing the method of any one of Examples 65-71.
In Example 74, the apparatus of Example 73 can optionally include the feature that the means for performing the method comprise a processor and a memory.
In Example 75, the apparatus of Example 74 can optionally include the feature that the memory comprises machine-readable instructions that, when executed, cause the apparatus to perform the method.
In Example 76, the apparatus of any one of Examples 73-75 can optionally include the feature that the apparatus is a computing system.
Example 77 is at least one computer-readable medium comprising instructions that, when executed, implement the method of any one of Examples 65-71 or realize the apparatus of any one of Examples 73-76.
Example 78 is a non-transitory, tangible, computer-readable storage medium encoded with instructions that, when executed, cause a processing unit to perform a method comprising: receiving a target number of domains for the plurality of processing cores; and dividing a plurality of computing cores into the target number of domains.
In Example 79, the medium of Example 78 can optionally include the feature of the method further comprising communicating with the plurality of processing cores via a plurality of connections; and disabling at least one of the plurality of the connections to create one of the target number of domains.
In Example 80, the medium of any one of Examples 78-79 can optionally include the feature of the method further comprising: executing, with one of the plurality of processing cores, a hypervisor to create one of the target number of domains.
In Example 81, the medium of any one of Examples 78-80 can optionally include the feature that each of the target number of domains concurrently performs a job from a different service level agreement.
In Example 82, the medium of any one of Examples 78-81 can optionally include the feature that one of the plurality of processing cores includes an integrated memory controller to support two of the target number of domains executed by the one of the plurality of processing cores.
In Example 83, the medium of any one of Examples 78-82 can optionally include the feature that a job is assigned to one of the target number of domains based at least in part on a service level agreement.
In Example 84, the medium of any one of Examples 78-83 can optionally include the feature that a platform controller hub is emulated to support at least one of the target number of domains.
Example 85 is an apparatus for a balanced processing, the apparatus comprising: a memory element operable to store electronic code; a first core to operate at a first voltage or frequency; a second core to operate at a second voltage or frequency different from the first voltage or frequency; and a processor operable to execute instructions associated with the electronic code to receive an indication of the first voltage or frequency and to receive an indication of the second voltage or frequency, wherein the first core performs a first processing job at the first voltage or frequency, and the second core performs a second processing job at the second voltage or frequency.
In Example 86, the apparatus of Example 85 can optionally include the feature that the processor is to assign the first processing job to the first core based at least in part on the first voltage or frequency.
In Example 87, the apparatus of any one of Examples 85-86 can optionally include the feature that the first core and the second core are in a same socket of a compute node of the apparatus.
In Example 88, the apparatus of any one of Examples 85-87 can optionally include the features that the apparatus includes a plurality of compute nodes, and the first core and the second core are in different compute nodes of the plurality of compute nodes.
In Example 89, the apparatus of any one of Examples 85-88 can optionally include the feature that the processor is to receive a first location of the first core and a second location of the second core and to assign the second processing job to the second core based at least in part on the first location and the second location.
In Example 90, the apparatus of any one of Examples 85-89 can optionally include the features that the processor is to assign the first processing job to the first core based at least in part on a first service level agreement and to assign the second processing job to the second core based at least in part on a second service level agreement, and the first service level agreement defines a greater number of transactions per second than a number of transactions per second defined by the second service level agreement.
In Example 91, the apparatus of any one of Examples 85-90 can optionally include the feature that a performance of the first core and the second core are calculated by summing a product of the first voltage and the first frequency with a product of the second voltage and the second frequency.
In Example 92, the apparatus of any one of Examples 85-91 can optionally include the feature that a set of voltage and frequency pairs of operational states for each processor core is stored.
In Example 93, the apparatus of Example 92 can optionally include the features that the set of voltage and frequency pairs is stored in a BIOS, and the set of voltage and frequency pairs is provided to a pod manager that schedules workloads, based at least in part on the set of voltage and frequency pairs.
In Example 94, the apparatus of any one of Examples 85-93 can optionally include the feature that the apparatus is a computing system.
Example 95 is an apparatus for a balanced processing, the apparatus comprising: first means for operating at a first voltage or frequency; second means for operating at a second voltage or frequency different from the first voltage or frequency; and processing means for receiving an indication of the first voltage or frequency and for receiving an indication of the second voltage or frequency, wherein the first means performs a first processing job at the first voltage or frequency, and the second means performs a second processing job at the second voltage or frequency.
In Example 96, the apparatus of Example 95 can optionally include the feature that the processing means assigns the first processing job to the first means based at least in part on the first voltage or frequency.
In Example 97, the apparatus of any one of Examples 95-96 can optionally include the feature that the first means and the second means are in a same socket of a compute node of the apparatus.
In Example 98, the apparatus of any one of Examples 95-97 can optionally include the features that the apparatus includes a plurality of compute nodes, and the first means and the second means are in different compute nodes of the plurality of compute nodes.
In Example 99, the apparatus of any one of Examples 95-98 can optionally include the feature that the processing means receives a first location of the first means and a second location of the second means and assigns the second processing job to the second means based at least in part on the first location and the second location.
In Example 100, the apparatus of any one of Examples 95-99 can optionally include the features that the processing means assigns the first processing job to the first means based at least in part on a first service level agreement and assigns the second processing job to the second means based at least in part on a second service level agreement, and the first service level agreement defines a greater number of transactions per second than a number of transactions per second defined by the second service level agreement.
In Example 101, the apparatus of any one of Examples 95-100 can optionally include the feature that a performance of the first means and the second means are calculated by summing a product of the first voltage and the first frequency with a product of the second voltage and the second frequency.
In Example 102, the apparatus of any one of Examples 95-101 can optionally include the feature that a set of voltage and frequency pairs of operational states for each processor core is stored.
In Example 103, the apparatus of Example 102 can optionally include the features that the set of voltage and frequency pairs is stored in a BIOS, and the set of voltage and frequency pairs is provided to a pod manager that schedules workloads, based at least in part on the set of voltage and frequency pairs.
In Example 104, the apparatus of any one of Examples 95-103 can optionally include the feature that the apparatus is a computing system.
Example 105 is a method implemented by a rack for a balanced processing, the method comprising: operating a first core at a first voltage or frequency; operating a second core at a second voltage or frequency different from the first voltage or frequency; receiving an indication of the first voltage or frequency; and receiving an indication of the second voltage or frequency, wherein the first core performs a first processing job at the first voltage or frequency, and the second core performs a second processing job at the second voltage or frequency.
In Example 106, the method of Example 105 can optionally include assigning the first processing job to the first core based at least in part on the first voltage or frequency.
In Example 107, the method of any one of Examples 105-106 can optionally include the feature that the first core and the second core are in a same socket of a compute node of the rack.
In Example 108, the method of any one of Examples 105-107 can optionally include the features that the rack includes a plurality of compute nodes, and the first core and the second core are in different compute nodes of the plurality of compute nodes.
In Example 109, the method of any one of Examples 105-108 can optionally include receiving a first location of the first core and a second location of the second core; and assigning the second processing job to the second core based at least in part on the first location and the second location.
In Example 110, the method of any one of Examples 105-109 can optionally include assigning the first processing job to the first core based at least in part on a first service level agreement; and assigning the second processing job to the second core based at least in part on a second service level agreement, wherein the first service level agreement defines a greater number of transactions per second than a number of transactions per second defined by the second service level agreement.
In Example 111, the method of any one of Examples 105-110 can optionally include calculating a performance of the first core and the second core by summing a product of the first voltage and the first frequency with a product of the second voltage and the second frequency.
In Example 112, the method of any one of Examples 105-111 can optionally include the feature that a set of voltage and frequency pairs of operational states for each processor core is stored.
In Example 113, the method of Example 112 can optionally include the features that the set of voltage and frequency pairs is stored in a BIOS, and the set of voltage and frequency pairs is provided to a pod manager that schedules workloads, based at least in part on the set of voltage and frequency pairs.
Example 114 is a machine-readable medium including code that, when executed, causes a machine to perform the method of any one of Examples 105-113.
Example 115 is an apparatus comprising means for performing the method of any one of Examples 105-113.
In Example 116, the apparatus of Example 115 can optionally include the feature that the means for performing the method comprise a processor and a memory.
In Example 117, the apparatus of Example 116 can optionally include the feature that the memory comprises machine-readable instructions that, when executed, cause the apparatus to perform the method.
In Example 118, the apparatus of any one of Examples 115-117 can optionally include the feature that the apparatus is a computing system.
Example 119 is at least one computer-readable medium comprising instructions that, when executed, implement the method of any one of Examples 105-113 or realize the apparatus of any one of Examples 115-118.
Example 120 is a non-transitory, tangible, computer-readable storage medium encoded with instructions that, when executed, cause a processing unit to perform a method comprising: operating a first core of a rack at a first voltage or frequency; operating a second core at a second voltage or frequency different from the first voltage or frequency; receiving an indication of the first voltage or frequency; and receiving an indication of the second voltage or frequency, wherein the first core performs a first processing job at the first voltage or frequency, and the second core performs a second processing job at the second voltage or frequency.
In Example 121, the medium of Example 120 can optionally include the feature of the method further comprising: assigning the first processing job to the first core based at least in part on the first voltage or frequency.
In Example 122, the medium of any one of Examples 120-121 can optionally include the feature that the first core and the second core are in a same socket of a compute node of the rack.
In Example 123, the medium of any one of Examples 120-122 can optionally include the features that the rack includes a plurality of compute nodes, and the first core and the second core are in different compute nodes of the plurality of compute nodes.
In Example 124, the medium of any one of Examples 120-123 can optionally include the feature of the method further comprising: receiving a first location of the first core and a second location of the second core; and assigning the second processing job to the second core based at least in part on the first location and the second location.
In Example 125, the medium of any one of Examples 120-124 can optionally include the feature of the method further comprising: assigning the first processing job to the first core based at least in part on a first service level agreement; and assigning the second processing job to the second core based at least in part on a second service level agreement, wherein the first service level agreement defines a greater number of transactions per second than a number of transactions per second defined by the second service level agreement.
In Example 126, the medium of any one of Examples 120-125 can optionally include the feature of the method further comprising: calculating a performance of the first core and the second core by summing a product of the first voltage and the first frequency with a product of the second voltage and the second frequency.
In Example 127, the medium of any one of Examples 120-126 can optionally include the feature that a set of voltage and frequency pairs of operational states for each processor core is stored.
In Example 128, the medium of Example 127 can optionally include the feature that the set of voltage and frequency pairs is stored in a BIOS, and the set of voltage and frequency pairs is provided to a pod manager that schedules workloads, based at least in part on the set of voltage and frequency pairs.

## Claims

1. A method to perform an event throttling, the method comprising:
throttling at least one resource of a plurality of resources, if a controller determines a heat event or a power event has occurred, wherein the throttling is based at least in part on one or more service level agreements (SLAs) associated with the resources.

2. The method of Claim 1, wherein the throttled at least one resource is associated with a lower level of service that is lower than a level of service associated with a resource that is not throttled.

3. The method of any preceding claim, further comprising:
determining a capability of one of a plurality of compute nodes assigned to the one or more SLAs.

4. The method of any preceding claim, further comprising:
determining the at least one resource of one of a plurality of compute nodes in a zone.

5. The method of any preceding claim, further comprising:
determining a head room of the at least one resource available for throttling.

6. The method of any preceding claim, wherein the controller is a BMC, a management controller, or is a part of an orchestration layer.

7. The method of any preceding claim, wherein the at least one resource is a network bandwidth, a number of accesses to a memory, or a number of operations performed by a processor.

8. The method of any preceding claim, further comprising:
tracking, with an orchestrator, the plurality of resources, which work on tasks assigned to the one or more SLAs; and
grouping, with the orchestrator, the plurality of resources into a zone.

9. The method of any preceding claim, wherein throttled resources are all in a zone having a first SLA that is lower than resources in other zones associated with a second SLA, the second SLA being higher than the first SLA.

10. The method of any preceding claim, wherein all resources in the zone having the first SLA are throttled before resources are throttled in a zone with a higher SLA.

11. An apparatus comprising means for performing the method of any preceding claim.

12. The apparatus of Claim 11, wherein the means for performing the method comprise a processor and a memory.

13. The apparatus of Claim 12, wherein the memory comprises machine-readable instructions that, when executed, cause the apparatus to perform the method of any one of Claims 1-10.

14. The apparatus of any one of Claims 11-13, wherein the apparatus is a computing system.

15. At least one computer-readable medium comprising instructions that, when executed, implement a method or realize an apparatus as claimed in any preceding claim.
